# EUROPEAN PATENT SPECIFICATION

(11) **EP 3 796 478 B1**
(45) Date of publication and mention of the grant of the patent: **23.08.2023**
(21) Application number: 20195994.7
(22) Date of filing: 14.09.2020
(51) Int. Cl.: H01R 13/52

(54) **HOUSING FOR A CHARGING DEVICE FOR A VEHICLE**
GEHÄUSE FÜR EINE LADEVORRICHTUNG FÜR EIN FAHRZEUG
BOÎTIER POUR UN DISPOSITIF DE RECHARGE DE VÉHICULE

(30) Priority: 20.09.2019 FR 1910377
(43) Date of publication of application: 24.03.2021
(73) Proprietor: Tyco Electronics France SAS, 95300 Pontoise (FR)
(72) Inventor: DUPONT, Bruno, 75015 Paris (FR); CHIN, Tehuai, 95800 Cergy (FR)
(74) Representative: Grünecker Patent- und Rechtsanwälte PartG mbB

(56) References cited:
- WO-A1-2011/104609
- WO-A1-2015/004053
- US-A1- 2015 343 914
- US-A1- 2017 054 248

## Description

The present invention relates to a housing for a charging device for an electric vehicle.

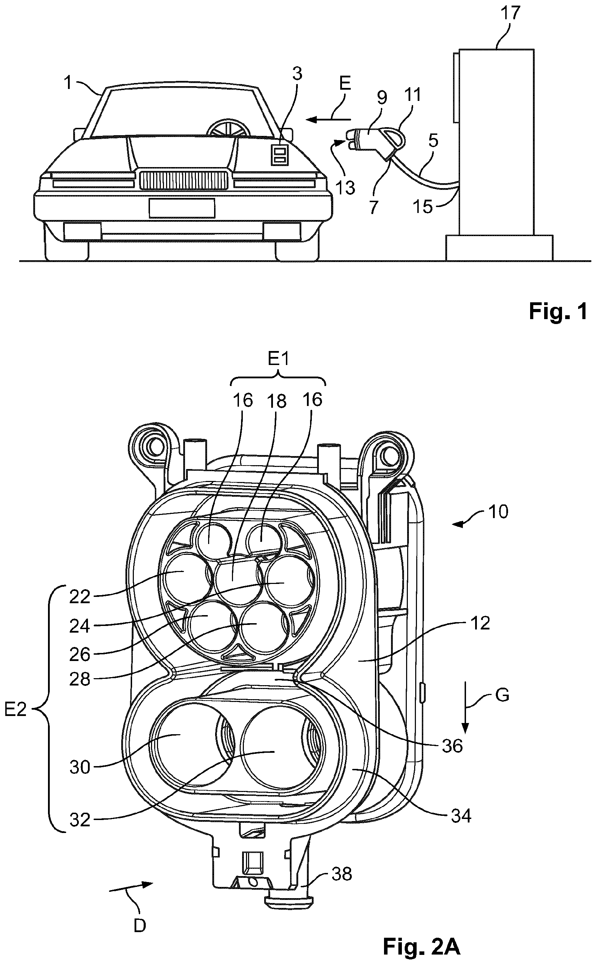

The propulsion of electric vehicles is exclusively or partially provided by one or more electric motors. It can draw its energy from electrical storage means such as a rechargeable battery. An example of an electric vehicle of this type is illustrated in Figure 1. The vehicle 1 of Figure 1 comprises an electric inlet 3 by means of which the batteries (not visible in Figure 1) of the vehicle 2 can be charged by means of a charging cable 5. The charging cable 5 comprises a charging nozzle 9 at one end 7, provided with a handle 11 and a portion 13 for connecting to the electric inlet 3 in a connecting direction E. Another end 15 of the charging cable 5, opposite to the end 7, is connected to a charging station 17.

The many standards which exist for charging connectors are a function of the geographical region in which the vehicle is being marketed. As an example, it is known to use a charging connector of the combined charging system or CCS type in order to be able to charge an electric vehicle rapidly using direct current (DC). This type of charging connector can comprise both pins for direct current (DC) and pins for single phase or three phase alternating current (AC). A direct current (DC) supply means that the batteries can be charged relatively rapidly, and thus advantageously, because of its power output of at least 150 kW and a voltage of more than 400 V.

In order to accommodate charging an electric vehicle in rainy conditions, known charging connectors of this type are provided with drains which act as drainage holes at the level of cavities in which the pins are housed in order to evacuate water from the charging connector. Document WO2015004053 discloses a charging connector of the prior art.

However, it has been shown that in the case of heavy rain, the water evacuated via the drains can create a conducting pathway for electricity and thus generate a leakage current from the high voltage direct current or alternating current terminals. With the currently known design of charging connectors, it has been shown that the shortest pathway for moisture can direct the leakage current towards the charging nozzle. Thus, there is a risk of a closed circuit being created when a user manipulates the handle of the charging nozzle, for example. The risk to the user increases with the electrical power at the high voltage direct current terminals where the voltage is above 400 V.

Thus, the present invention aims to improve electrical safety when charging an electric vehicle, in particular for a charging connector comprising high voltage direct current pins, in particular in conditions where there is heavy rain.

The object of the present invention is solved by the subject matter of the independent claim. Thereby, the aim of the present invention is achieved by means of a housing for an electrical connector, in particular for an electrical connector of a charging device for an electric vehicle, comprising a first set of orifices intended to receive first pins of an electrical connector, and a second set of orifices intended to receive second pins of an electrical connector, the orifices being holes passing through the housing from a first interface of the housing towards a second interface of the housing in a connecting direction, the first interface of the housing being designed to be coupled with a housing of a mating electrical connector in the connecting direction, characterized in that the housing comprises a first draining means which is suitable for evacuating a fluid coming from the first set of orifices, and the housing comprises a second draining means which is suitable for evacuating a fluid coming from the second set of orifices, such that the first draining means and the second draining means are isolated from each other, preventing fluid communication between a fluid coming from the first set of orifices and a fluid coming from the second set of orifices.

Thus, the housing in accordance with the present invention can be used to selectively separate a fluid depending on whether it is coming from a first set of orifices or from a second set of orifices. Because the first set of orifices can receive the pins of a connector which has a lower power output than that of the pins of the second set of orifices, the first draining means and the second draining means can be used to prevent fluid communication between fluids having different potentials. Thus, the housing can advantageously be used to isolate, in a fluid sense, a fluid which could be in contact with the terminals of a high voltage direct current connector, for example.

Advantageous embodiments of the present invention are the subject matter of the dependent claims.

The present invention, pertaining to a housing for an electrical connector, may be further improved by means of the following embodiments.

In accordance with one embodiment, the first draining means and the second draining means may each comprise an evacuation duct, the evacuation duct of the first draining means possibly being disposed along a direction which is opposite to that of the evacuation duct of the second draining means.

Thus, the housing is also designed to allow evacuation of each of the fluids in different directions with respect to each other, which means that, all the more, fluid communication between a fluid coming from the first set of orifices and a fluid coming from the second set of orifices can be prevented.

In accordance with one embodiment, the evacuation duct of the first draining means may be disposed in a manner such as to extend towards the first interface or towards the bottom of the housing in the gravitational direction.

Thus, the evacuation duct of the first draining means can be used to evacuate a fluid from the side of the interface provided to receive a mating connector, for example a connector of a charging nozzle for charging an electric vehicle. Thus, the evacuation duct of the first drain can be used to evacuate a fluid away from the vehicle.

In accordance with one embodiment, the evacuation duct of the second draining means may extend towards the second interface of the housing, in particular beyond the second interface of the housing. In addition, in accordance with another embodiment, the evacuation duct of the second draining means may extend from the second interface in a direction parallel to the connecting direction and opposite to the first interface of the housing.

Thus, the evacuation duct of the second draining means is designed to evacuate a fluid towards an interior space of a vehicle. For this reason, the evacuation duct of the second draining means can be used to prevent the evacuation of fluid away from the vehicle, i.e. from the side where the user is located when charging the vehicle. By preventing fluid coming from the second set of orifices, intended to receive high voltage terminals, in particular above 400 V, from being evacuated away from the vehicle, the risk of a closed circuit being formed along the flow path of said fluid when a user charges their vehicle is minimized.

In accordance with one embodiment, the evacuation duct of the first draining means may be substantially perpendicular to the evacuation duct of the second draining means.

Thus, the evacuation ducts are disposed in a manner such that the fluids originating from each of the two sets of orifices are evacuated separately from the vehicle (towards the ground) along evacuation ducts which are not parallel to each other. A configuration of this type for the evacuation ducts can readily be adapted to a known housing of the prior art. Thus, implementation of such a disposition is simplified.

In accordance with one embodiment, the second draining means may comprise a draining cavity delimited by a wall which extends from the second interface of the housing, said draining cavity being capable of being in fluid contact with the second set of orifices.

In accordance with one embodiment, the draining cavity may be capable of being closed by means of a sealing plug with dimensions with respect to the draining cavity such that a fluid coming from the second set of orifices is capable of moving between the draining cavity and the sealing plug.

The sealing plug can thus be used to provide the draining cavity with a seal along the flow path of a fluid coming from the second set of orifices.

In accordance with one embodiment, the evacuation duct of the second draining means may be disposed in a manner such as to be aligned with a hole provided in the sealing plug in order to enable a fluid coming from the draining cavity to be evacuated towards the evacuation duct of the second draining means.

Thus, the fluid coming from the second set of orifices and collected in the draining cavity may be evacuated from the draining cavity via the evacuation duct of the second draining means.

In accordance with one embodiment, the draining cavity may substantially be in the shape of a "Y".

This Y shape can in particular be used to enable the orifices of the second set of orifices to be isolated from each other, in particular the orifices intended to receive the high voltage supply terminals, by disposing them on each side of the three zones defined by the outline of the Y shape.

In accordance with one embodiment, the housing may comprise two sub-housings which can be interlocked or snap fitted one with the other in the connecting direction, a first sub-housing comprising the first interface of the housing and a second sub-housing comprising the evacuation duct of the second draining means.

Thus, the housing can be assembled easily and does not require separate components such as screws or nuts for assembly or for mounting.

The invention and its advantages will be explained in more detail below with the aid of preferred embodiments made with reference to the accompanying figures, in which:
Figure 1 represents a diagrammatic view of an electric vehicle;
Figure 2a represents a diagrammatic view of a first interface of a housing in accordance with the present invention;
Figure 2b represents a diagrammatic view of a first interface of a housing in accordance with the present invention;
Figure 3 represents an exploded view of a housing in accordance with the present invention viewed from a second interface of the housing, a seal and a sealing plug;
Figure 4a represents a view of the second interface of the housing and of the sealing plug;
Figure 4b represents a view of the second interface of the housing and of the seal;
Figure 5 represents a sectional view of a connection between the housing in accordance with the present invention and a charging nozzle.

The invention will now be described in more detail with the aid of advantageous embodiments by way of example and with reference to the figures. The embodiments described are simply possible configurations and it should be borne in mind that the present invention is defined by the appended claims.

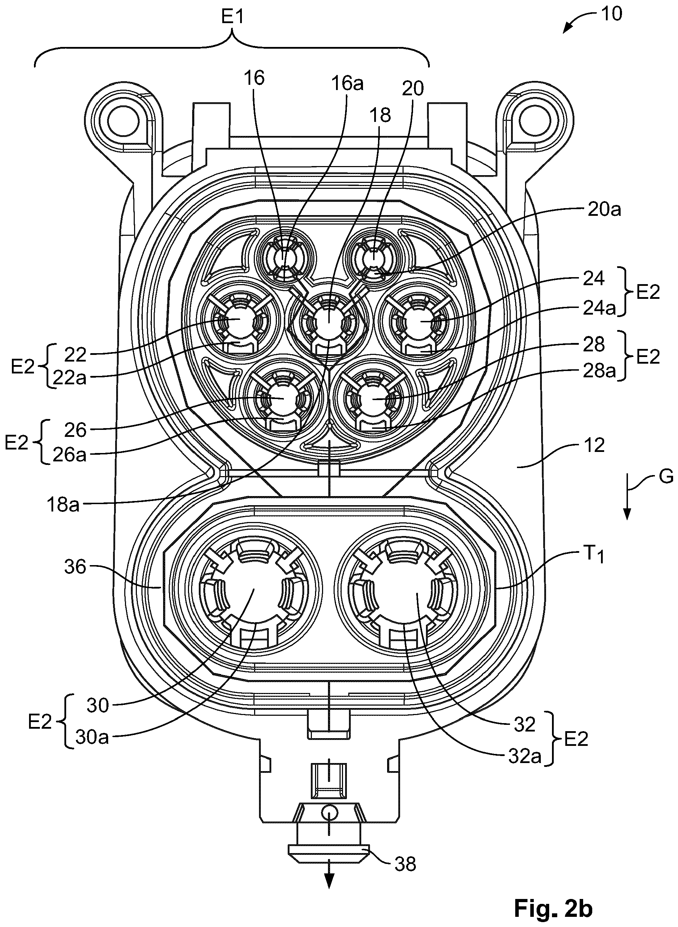

Figures 2a and 2b represent a housing 10 for an electrical connector, in particular for an electrical connector of a charging device for an electric vehicle. The housing 10 is constituted by an electrically insulating material. The housing 10 may be manufactured from an injection moulded plastic.

The housing 10 comprises a first interface 12 which is designed to be coupled with a housing of a mating electrical connector in a connecting direction indicated by the arrow D in Figure 2a. The first interface 12 is in particular adapted to receive a mating electrical connector of a charging nozzle for an electric vehicle, such as that shown in Figure 1 and indicated by reference numeral 9.

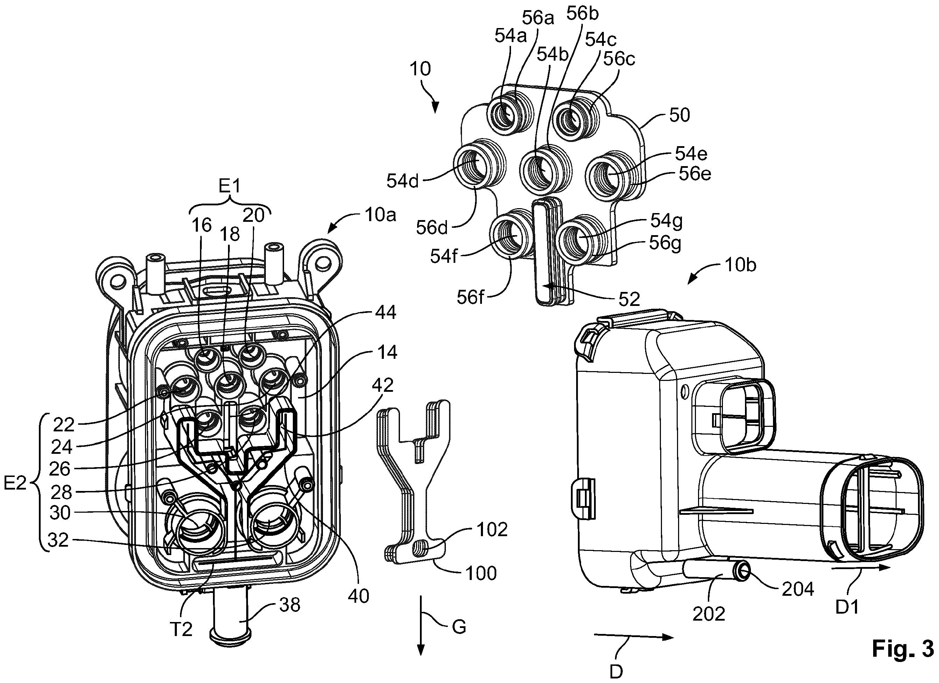

The housing 10 comprises a second interface 14, opposite to and parallel to the first interface 12, which is not visible in Figures 2a and 2b, but which is shown in Figure 3.

The housing 10 comprises a first set E1 of orifices 16, 18, 20 (references indicated by the abbreviation 16-20 below) and a second set E2 of orifices 22, 24, 26, 28, 30, 32 (references indicated by the abbreviation 22-32 below). The orifices 16-32 are through holes which pass through the housing from one side to the other, so that they open on the one hand at the level of the first interface 12 and on the other hand at the level of the second interface 14.

The orifices 16, 18, 20 of the first set E1 and the orifices 22, 24, 26, 28, 30, 32 of the second set E2 are provided with drains 16a, 18a, 20a, 22a, 24a, 26a, 28a, 30a, 32a in order to evacuate water. The drains are a set of holes, cavities or tubes which can be used to collect a fluid which could stagnate in cavities orientated towards the top of the housing 10 in the gravitational direction.

The orifices 16, 18, 20 of the first set E1 are provided in order to receive low voltage pins (i.e. electrical contacts), for example 12 V; while the orifices 22-32 of the second set of orifices E2 are provided in order to receive pins at a higher voltage than that of the first set E1. The orifices 30, 32 of the second set of orifices E2 are in particular provided in order to receive a high voltage direct current power supply, in particular with a voltage of more than 400 V. The housing 10 is, for example, adapted for a connector of the Combo type.

The first interface 12 of the housing 10 comprises a wall 34 which extends perpendicular to said interface 12 in a manner such as to form a draining chamber 36 between the wall 34 and the sets of orifices E1, E2.

Only the drains from the orifices 16, 18, 20 of the first set E1 are adapted to evacuate a fluid coming from said orifices towards the draining chamber 36. This fluid can then be evacuated via an evacuation duct 38 located at the lowermost point of the housing 10 in the gravitational direction G. The draining chamber 36 corresponds to a counterpart of a charging nozzle.

The housing 10 comprises a first draining means which is suitable for evacuating a fluid, such as water coming from the first set of orifices E1, towards the draining chamber 36 of the first interface 12 of the housing 10. A flow path for a fluid coming from the first set of orifices E1 is represented by the outline T1 in Figure 2b. The draining chamber 36 is constituted by a seal disposed on the second interface 14 of the housing 10, opposite to and parallel to the first interface 12, which is not visible in Figures 2a and 2b, but which is represented in Figure 3 and described below. The first draining means in accordance with the present invention therefore comprises a draining chamber constituted by a seal, in particular a seal produced from rubber.

In accordance with the present invention, the housing 10 comprises a second draining means which is suitable for evacuating a fluid coming from the second set of orifices E2 in a manner that is separated from the first set of orifices E1.

The second draining means will be described below with reference to Figures 3, 4a and 5 in particular.

Figure 3 illustrates the second interface 14 of the housing 10 provided with the first set of orifices E1 and the second set of orifices E2 described above with reference to Figures 2a and 2b. The reference elements carrying the same reference numerals mentioned above will not be described again and reference should be made to Figures 2a and 2b.

The second interface 14 of the housing 10 comprises a wall 40 which extends perpendicular to said interface and delimits a draining cavity 42. In the embodiment shown in Figure 3, the draining cavity 42 is substantially in the shape of a Y. In a variation of the invention, the draining cavity could have a different geometric shape.

The orifices 30 and 32 intended to receive the high voltage direct current terminals are disposed either side of draining cavity 42.

The draining cavity 42 is in fluid communication with the orifices 22-32 of the second set of orifices E2. Thus, a fluid coming from the orifices 22-32, in particular coming from the drains of the orifices 22-32, can be recovered in the draining cavity 42. A flow path for a fluid coming from the first set of orifices E2 is shown by the outline T2 in Figure 3.

In a variation, the draining cavity 42 comprises at least two cavities which are independent of each other, disposed in a manner such that a fluid in contact with the high voltage direct current pins in the orifices 30, 32 are fluidically isolated from a fluid in contact with the high voltage alternating current pins in the orifices 22, 24, 26, 28. A draining cavity of this type could therefore comprise a first cavity for recovering a fluid coming from the orifices 30, 32 and a second cavity, isolated from the first cavity, for recovering a fluid coming from the orifices 22, 24, 26, 28.

In another variation, a first cavity could serve for the evacuation of a fluid in contact with a high voltage direct current pin in the orifice 30; a second cavity could serve for the evacuation of a fluid in contact with a high voltage direct current pin in the orifice 32 and a third cavity could serve for the evacuation of a fluid in contact with the high voltage alternating current pins in the orifices 22, 24, 26, 28; the first cavity, the second cavity and the third cavity being configured in a manner such as to be fluidically isolated from each other.

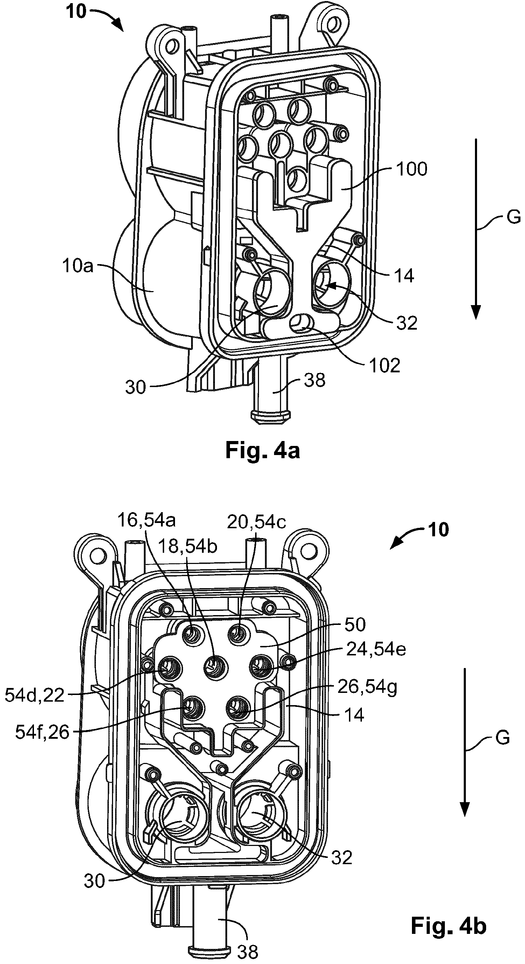

The draining cavity 42 is closed by a sealing plug 100 made from an elastomer, for example. Figure 4a illustrates a view in which the sealing plug 100 is disposed in the draining cavity 42. The dimensions of the sealing plug 100 are such that a fluid coming from the drains of the orifices 22-32 of the second set of orifices E2 can flow in the draining cavity 42 along the second interface 14 in the gravitational direction G. So that a fluid can be evacuated from the draining cavity 42, the sealing plug 100 is provided with an evacuation hole 102 at the lowest point of the sealing plug 100 in the gravitational direction G.

Figure 3 also illustrates a seal 50 which can be used to constitute the draining chamber 36 (at the level of the interface 12, visible in Figure 2b). On one of its interfaces, the seal 50 comprises a protuberance 52, which is essentially rectangular in the example shown, and with a complementary shape to a cavity 44 at the level of the interface 14 of the housing 10. The seal 50 furthermore comprises a plurality of holes 54a-g with dimensions and dispositions which are a function of the orifices 16, 28, 20, 22, 24, 26, 28 of the housing 10. The holes 54a-g each comprise a wall 56a-g which extends perpendicular to the seal 50 in the same direction as the protuberance 52.

Figure 4b illustrates a view in which the seal 50 is disposed at the level of the interface 14 of the housing 10, i.e. in a condition in which the seal 50 is assembled with the housing 10. In this assembled condition illustrated in Figure 4b, the protuberance 52 of the seal 50 has been inserted in the corresponding cavity 44 of the interface 14 of the housing 10. The seal 50 can thus be used to connect the drains (see references 16a, 18a, 20a in Figure 2b) of the orifices 16, 18, 20 of the first set E1 to the draining chamber 36 located at the level of the interface 12 of the housing 10 in a sealed manner.

In accordance with the present invention, and as illustrated in Figure 3, the housing 10 comprises two sub-housings 10a, 10b. The first sub-housing 10a corresponds to the housing illustrated in Figures 2a and 2b and comprises the sets of orifices E1 and E2 as well as the evacuation duct 38. The second sub-housing 10b is designed to be mounted on the second interface 14 of the first sub-housing 10a. The sub-housings 10a, 10b are capable of being assembled by interlocking or by snap fitting.

The second sub-housing 10b comprises an evacuation duct 202. The evacuation duct 202 illustrated in Figure 3 is tubular in shape. In a variation, the evacuation duct could have a different geometry.

The evacuation duct 202 is disposed in a manner such that when the housing 10 is in the assembled state, a hollow portion 204 of evacuation duct 202 is brought into communication with the evacuation hole 102 of the sealing plug 100. A fluid can be evacuated from the draining cavity 42 via the hollow portion 204.

In accordance with the present invention, the first evacuation duct 38 is provided in order to evacuate a fluid coming from the first set of orifices E1, while the second evacuation duct 202 is provided in order to evacuate a fluid coming from the second set of orifices E2. The second evacuation duct 202 of the second portion of the housing 200 is disposed in a manner which is substantially perpendicular to the evacuation duct 38. In addition, the second evacuation duct 202 is disposed in a manner such as to evacuate fluid from the second interface 14 in a direction D1 away from the first interface 12. Thus, fluid communication between a fluid coming from the second set of orifices E2 - being potentially in contact with the high voltage direct current terminals - and a fluid coming from the first set of orifices E1 is prevented.

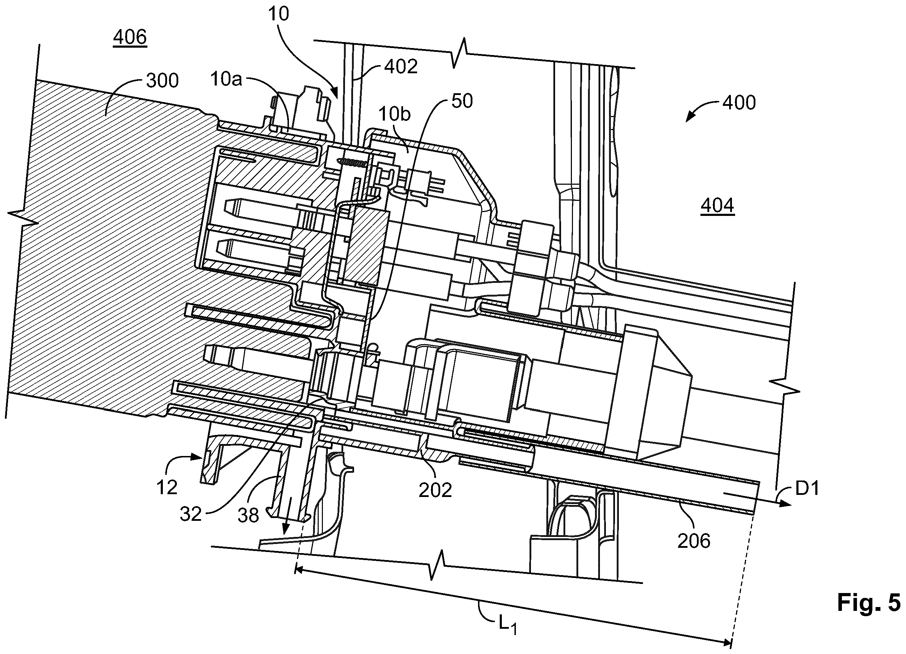

In addition, as illustrated in Figure 5, the second evacuation duct 202 may be provided with an extension 206, further increasing the length L1 of the second evacuation duct 202.

Thus, the length L1 of the second evacuation duct 202, optionally increased by the length of the tube 206, is longer than the length of the moisture pathway which could be created on the side of the interface 12 between the orifices 22-32 of the second set E2 and a charging nozzle 300.

This disposition can be used to make the path travelled by a fluid coming from the second set of orifices E2 longer than that travelled by a fluid coming from the first set of orifices E1. This disposition can therefore reduce the risk that a leakage current could be created with a fluid coming from the high voltage direct current orifices E1, the leakage current being preferentially generated over the shortest moisture pathway, which would be on the interface 12.

The present invention can therefore be used to separate a fluid coming from the high voltage direct current and alternating current orifices E2 from a fluid coming from the terminals with a lower voltage and from the interface 10, to which a user could connect a charging nozzle 300 (see Figure 5). As illustrated in Figure 5. The housing 10 is disposed with respect to a vehicle 400 provided with bodywork 402 partially illustrated in Figure 5. The bodywork 402 delineates an internal space 404 from an external space 406 of the vehicle 400.

Advantageously, the second evacuation duct 202, 206 is disposed in the internal space 404 of the vehicle 400, thus allowing a fluid to drain in the direction D1 to an internal zone of the vehicle 400 at a distance from the interface 12 and from the charging nozzle 300 (not visible in Figure 5). The fluid is then evacuated away from the vehicle, towards the ground. Thus, the fluid which is at a higher voltage is taken away and evacuated along a path corresponding to the longest path from among the paths which a leakage current could take in order to reach the handle of the charging nozzle 300 which can be handled by the user.

A fluid coming from the orifices 16-18-20-22-24-26-28-30-32 of the housing 10 can therefore be selectively evacuated to either side of an element of the bodywork 402 of a vehicle 400 depending on whether the fluid is coming from the first set of orifices E1 or from the second set of orifices E2.

The present invention may be adapted to any of the standards employed for the charging socket which are specific to the geographical region in which the vehicle is being marketed.

The embodiments described are simply possible configurations and it should be borne in mind that the individual characteristics of the various embodiments could be combined together or be provided independently of each other.

### List of reference numerals

1: vehicle
3: electric inlet
5: charging cable
7: end
9: charging nozzle
11: handle
13: connecting portion
15: end
17: charging terminals
10: housing
10a, 10b: sub-housing
12; first interface
14: second interface
16, 18, 20, E1: first set of orifices
22, 24, 26, 28, 30, 32, E2: second set of orifices
34: wall
36: draining chamber
38: evacuation duct
40: wall
42: draining cavity
44: cavity
50: seal
52: protuberance
54a-g: hole
56a-g: wall
100: sealing plug
102: hole
202: evacuation duct
204: hollow portion
206: extension of evacuation duct
300: charging nozzle
400: vehicle
402: bodywork
404: internal space of vehicle
406: external space of vehicle
D: connecting direction
D1: draining direction
G: gravitational direction
L1: length of evacuation duct
T1; T2: flow path

## Claims

1. A housing for an electrical connector, in particular for an electrical connector of a charging device for an electric vehicle, comprising
a first set of orifices (16, 18, 20) intended to receive first pins of an electrical connector, and
a second set of orifices (22, 24, 26, 28, 30, 32) intended to receive second pins of an electrical connector,
the orifices (16, 18, 20, 22, 24, 26, 28, 30, 32) being holes passing through the housing from a first interface (12) of the housing towards a second interface (14) of the housing in a connecting direction,
the first interface (12) of the housing being designed to be coupled with a housing of a mating electrical connector in the connecting direction,
wherein
the housing comprises a first draining means which is suitable for evacuating a fluid coming from the first set of orifices (16, 18, 20), and
the housing comprises a second draining means which is suitable for evacuating a fluid coming from the second set of orifices (22, 24, 26, 28, 30, 32),
**characterized in that**
that the first draining means and the second draining means are isolated from each other, preventing fluid communication between a fluid coming from the first set of orifices (16, 18, 20) and a fluid coming from the second set of orifices (22, 24, 26, 28, 30, 32).

2. The housing as claimed in claim 1, wherein the first draining means and the second draining means each comprise an evacuation duct (38, 202), the evacuation duct (38) of the first draining means being disposed along a direction which is opposite to that of the evacuation duct (202) of the second draining means.

3. The housing as claimed in claim 2, wherein the evacuation duct (38) of the first draining means is disposed in a manner such as to extend towards the first interface (12) or towards the bottom of the housing in the gravitational direction.

4. The housing as claimed in claim 2 or claim 3, wherein the evacuation duct (202) of the second draining means extends towards the second interface (14) of the housing, in particular beyond the second interface (14) of the housing.

5. The housing as claimed in claim 4, wherein the evacuation duct (202) of the second draining means extends from the second interface (14) in a direction parallel to the connecting direction and opposite to the first interface (12) of the housing.

6. The housing as claimed in claim 2, 3 or 4, wherein the evacuation duct (38) of the first draining means is substantially perpendicular to the evacuation duct (202) of the second draining means.

7. The housing as claimed in one of the preceding claims, wherein the second draining means comprises a draining cavity (42) delimited by a wall (40) which extends from the second interface (14) of the housing, said draining cavity (42) being in fluid contact with the second set of orifices.

8. The housing as claimed in claim 7, wherein the draining cavity (42) is closed by means of a sealing plug (100) with dimensions with respect to the draining cavity (42) such that a fluid coming from the second set of orifices is capable of moving between the draining cavity (42) and the sealing plug (100).

9. The housing as claimed in claim 8, wherein the evacuation duct of the second draining means is disposed in a manner such as to be aligned with a hole (102) provided in the sealing plug (100) in order to enable a fluid coming from the draining cavity (42) to be evacuated towards the evacuation duct (202, 204) of the second draining means.

10. The housing as claimed in one of claims 7 to 9, the draining cavity (42) being substantially in the shape of a "Y".

11. The housing as claimed in one of claims 3 to 10, comprising two sub-housings (10a, 10b) which can be interlocked or snap fitted one with the other in the connecting direction, a first sub-housing (10a) comprising the first interface (12) of the housing and a second sub-housing (10b) comprising the evacuation duct (202, 204) of the second draining means.

## Patentansprüche

1. Gehäuse für einen elektrischen Verbinder, insbesondere für einen elektrischen Verbinder einer Ladeeinrichtung für ein Elektrofahrzeug, umfassend:
einen ersten Satz von Öffnungen (16, 18, 20), die zum Aufnehmen erster Stifte eines elektrischen Verbinders bestimmt sind, und
einen zweiten Satz von Öffnungen (22, 24, 26, 28, 30, 32), die zum Aufnehmen zweiter Stifte eines elektrischen Verbinders bestimmt sind,
wobei die Öffnungen (16, 18, 20, 22, 24, 26, 28, 30, 32) Löcher sind, die durch das Gehäuse von einer ersten Grenzfläche (12) des Gehäuses in einer Verbindungsrichtung auf eine zweite Grenzfläche (14) des Gehäuses zu verlaufen,
die erste Grenzfläche (12) des Gehäuses so ausgelegt ist, dass sie in der Verbindungsrichtung mit einem Gehäuse eines elektrischen Gegenverbinders gekoppelt werden kann,
wobei
das Gehäuse eine erste Ableiteinrichtung umfasst, die zum Abführen eines Fluids geeignet ist, das von dem ersten Satz von Öffnungen (16, 18, 20) kommt, und
das Gehäuse eine zweite Ableiteinrichtung aufweist, die zum Abführen eines Fluids geeignet ist,
das von dem zweiten Satz von Öffnungen (22, 24, 26, 28, 30, 32) kommt,
**dadurch gekennzeichnet, dass**
die erste Ableiteinrichtung und die zweite Ableiteinrichtung voneinander isoliert sind,
wodurch Fluidverbindung zwischen einem von dem ersten Satz von Öffnungen (16, 18, 20) kommenden Fluid und einem von dem zweiten Satz von Öffnungen (22, 24, 26, 28, 30, 32) kommenden Fluid verhindert wird.

2. Gehäuse nach Anspruch 1, wobei die erste Ableiteinrichtung und die zweite Ableiteinrichtung jeweils einen Abführungskanal (38, 202) umfassen und der Abführungskanal (38) der ersten Ableiteinrichtung in einer Richtung angeordnet ist, die derjenigen des Abführungskanals (202) der zweiten Ableiteinrichtung entgegengesetzt ist.

3. Gehäuse nach Anspruch 2, wobei der Abführungskanal (38) der ersten Ableiteinrichtung so angeordnet ist, dass er sich in Richtung der ersten Grenzfläche (12) oder in Richtung des Bodens des Gehäuses in der Schwerkraftrichtung erstreckt.

4. Gehäuse nach Anspruch 2 oder 3, wobei sich der Abführungskanal (202) der zweiten Ableiteinrichtung in Richtung der zweiten Grenzfläche (14) des Gehäuses, insbesondere über die zweite Grenzfläche (14) des Gehäuses hinaus, erstreckt.

5. Gehäuse nach Anspruch 4, wobei sich der Abführungskanal (202) der zweiten Ableiteinrichtung von der zweiten Grenzfläche (14) in einer Richtung parallel zu der Verbindungsrichtung und entgegengesetzt zu ersten Grenzfläche (12) des Gehäuses erstreckt.

6. Gehäuse nach Anspruch 2, 3 oder 4, wobei der Abführungskanal (38) der ersten Ableiteinrichtung im Wesentlichen senkrecht zu dem Abführungskanal (202) der zweiten Ableiteinrichtung ist.

7. Gehäuse nach einem der vorangehenden Ansprüche, wobei die zweite Ableiteinrichtung einen Ableithohlraum (42) umfasst, der durch eine Wand (40) begrenzt wird, die sich von der zweiten Grenzfläche (14) des Gehäuses aus erstreckt, wobei der Ableithohlraum (42) in Fluidkontakt mit dem zweiten Satz von Öffnungen ist.

8. Gehäuse nach Anspruch 7, wobei der Ableithohlraum (42) durch einen Abdichtstopfen (100) verschlossen wird, der in Bezug auf den Ableithohlraum (42) so dimensioniert ist, dass sich ein von dem zweiten Satz von Öffnungen kommendes Fluid zwischen dem Ableithohlraum (42) und dem Abdichtstopfen (100) bewegen kann.

9. Gehäuse nach Anspruch 8, wobei der Abführungskanal der zweiten Ableiteinrichtung so angeordnet ist, dass er auf ein in dem Abdichtstopfen (100) vorhandenes Loch (102) ausgerichtet ist, damit ein aus dem Ableithohlraum (42) kommendes Fluid in Richtung des Abführungskanals (202, 204) der zweiten Ableiteinrichtung abgeführt werden kann.

10. Gehäuse nach einem der Ansprüche 7 bis 9, wobei der Ableithohlraum (42) im Wesentlichen die Form eines "Y" hat.

11. Gehäuse nach einem der Ansprüche 3 bis 10, das zwei Teilgehäuse (10a, 10b) umfasst, die in der Verbindungsrichtung aneinander verriegelt oder eingerastet werden können, wobei ein erstes Teilgehäuse (10a) die erste Grenzfläche (12) des Gehäuses umfasst und ein zweites Teilgehäuse (10b) den Abführungskanal (202, 204) der zweiten Ableiteinrichtung umfasst.

## Revendications

1. Boîtier pour un connecteur électrique, en particulier pour un connecteur électrique d'un dispositif de charge pour un véhicule électrique, comprenant
un premier ensemble d'orifices (16, 18, 20) destiné à recevoir des premières broches d'un connecteur électrique, et
un deuxième ensemble d'orifices (22, 24, 26, 28, 30, 32) destiné à recevoir des deuxièmes broches d'un connecteur électrique,
les orifices (16, 18, 20, 22, 24, 26, 28, 30, 32) étant des trous traversant le boîtier depuis une première interface (12) du boîtier vers une deuxième interface (14) du boîtier dans une direction de connexion,
la première interface (12) du boîtier étant destinée à être couplée à un boîtier d'un connecteur électrique d'accouplement dans la direction de connexion,
dans lequel
le boîtier comporte un premier moyen de drainage adapté pour évacuer un fluide provenant du premier ensemble d'orifices (16, 18, 20), et
le boîtier comprend un deuxième moyen de drainage adapté pour évacuer un fluide provenant du deuxième ensemble d'orifices (22, 24, 26, 28, 30, 32),
**caractérisé en ce que** le premier moyen de drainage et le deuxième moyen de drainage sont isolés l'un de l'autre, empêchant une communication fluidique entre un fluide provenant du premier ensemble d'orifices (16, 18, 20) et un fluide provenant du deuxième ensemble d'orifices (22, 24, 26, 28, 30, 32).

2. Boîtier selon la revendication 1, dans lequel le premier moyen de drainage et le deuxième moyen de drainage comprennent chacun un conduit d'évacuation (38, 202), le conduit d'évacuation (38) du premier moyen de drainage étant disposé selon une direction opposée à celle du conduit d'évacuation (202) du deuxième moyen de drainage.

3. Boîtier selon la revendication 2, dans lequel le conduit d'évacuation (38) du premier moyen de drainage est disposé de manière à s'étendre vers la première interface (12) ou vers le fond du boîtier dans le sens de la gravité.

4. Boîtier selon la revendication 2 ou 3, dans lequel le conduit d'évacuation (202) du deuxième moyen de drainage s'étend vers la deuxième interface (14) du boîtier, en particulier au-delà de la deuxième interface (14) du boîtier.

5. Boîtier selon la revendication 4, dans lequel le conduit d'évacuation (202) du deuxième moyen de drainage s'étend depuis la deuxième interface (14) dans une direction parallèle à la direction de connexion et opposée à la première interface (12) du boîtier.

6. Boîtier selon la revendication 2, 3 ou 4, dans lequel le conduit d'évacuation (38) du premier moyen de drainage est substantiellement perpendiculaire au conduit d'évacuation (202) du deuxième moyen de drainage.

7. Boîtier selon l'une des revendications précédentes, dans lequel le deuxième moyen de drainage comprend une cavité de drainage (42) délimitée par une paroi (40) qui s'étend depuis la deuxième interface (14) du boîtier, ladite cavité de drainage (42) étant en contact fluidique avec le deuxième ensemble d'orifices.

8. Boîtier selon la revendication 7, dans lequel la cavité de drainage (42) est fermée au moyen d'un bouchon d'étanchéité (100) dimensionné par rapport à la cavité de drainage (42) de telle sorte qu'un fluide provenant du deuxième ensemble d'orifices est capable de se déplacer entre la cavité de drainage (42) et le bouchon d'étanchéité (100).

9. Boîtier selon la revendication 8, dans lequel le conduit d'évacuation du deuxième moyen de drainage est disposé de manière à être aligné avec un trou (102) pourvu dans le bouchon d'étanchéité (100) pour permettre à un fluide provenant de la cavité de drainage (42) d'être évacué vers le conduit d'évacuation (202, 204) du deuxième moyen de drainage.

10. Boîtier selon l'une des revendications 7 à 9, la cavité de drainage (42) étant substantiellement en forme de Y.

11. Boîtier selon l'une des revendications 3 à 10, comprenant deux sous-boîtiers (10a, 10b) emboîtables ou encliquetables l'un dans l'autre dans la direction de connexion, un premier sous-boîtier (10a) comprenant la première interface (12) du boîtier et un deuxième sous-boîtier (10b) comprenant le conduit d'évacuation (202, 204) du deuxième moyen de drainage.
